# EUROPEAN PATENT SPECIFICATION

(11) **EP 2 338 704 B1**
(45) Date of publication and mention of the grant of the patent: **30.03.2016**
(21) Application number: 10195177.0
(22) Date of filing: 15.12.2010
(51) Int. Cl.: B60C 23/04, B60R 25/00

(54) **Tire condition monitoring apparatus with keyless entry function**
Vorrichtung zur Überwachung des Reifenzustands mit schlüsselloser Zugangsfunktion
Appareil de surveillance d'état de pneu avec une fonction d'entrée sans clé

(30) Priority: 18.12.2009 JP 2009288168
(43) Date of publication of application: 29.06.2011
(73) Proprietor: Pacific Industrial Co., Ltd., Ogaki-shi, Gifu-ken 503-8603 (JP)
(72) Inventor: Katou, Michiya, Gifu-ken 503-8603 (JP)
(74) Representative: Groth & Co. KB

(56) References cited:
- US-A1- 2003 046 993
- US-A1- 2004 095 231
- US-A1- 2004 155 764
- US-A1- 2005 083 175
- US-A1- 2005 104 715
- US-A1- 2007 021 082

## Description

### BACKGROUND OF THE INVENTION

The present invention relates to a tire condition monitoring apparatus including a keyless entry function.

Japanese Laid-Open Patent Publication No. 2003-81059 discloses a vehicle-mounted system having a keyless entry device integrated with a tire condition monitoring apparatus. The system disclosed in the publication includes a control unit mounted on the vehicle body, a keyless entry portable communication device for transmitting high-frequency signals, and sensor units each provided in a vehicle wheel. The sensor unit transmits a high-frequency signal containing air pressure data of the tire attached to the wheel. The control unit is connected to antennas each arranged in the vehicle body to correspond to one of the wheels.

According to the system of the publication, when the ignition switch of the vehicle is turned on, the control unit is switched to an operation mode for tire air pressure monitoring, and receives high-frequency signals from the sensor units via the antennas, thereby obtaining the tire air pressures. On the other hand, when the ignition key is turned off, the control unit is switched to an operation mode for keyless entry, and receives a high-frequency signal from the portable communication device via the antennas, thereby locking or unlocking the vehicle doors.

The above publication discloses that, by integrating a keyless entry device and a tire condition monitoring apparatus, the size and the costs of the overall system can be reduced. However, although the publication discloses that a portable communication device transmits high-frequency signals, the publication does not disclose that a control unit sends signals to a portable communication device. That is, in general, when executing a keyless entry function, not only does the portable communication device send a signal to the control unit, but also the control unit also sends a signal to the portable communication device, so that signals are transmitted and received between the two. However, the publication discloses no configuration whatsoever regarding such signal transmission and reception between the two.

In addition, although the above publication discloses that the control unit itself is switched between the operation mode for tire air pressure monitoring and the operation mode for keyless entry in response to turning on and off of the vehicle ignition switch, the publication discloses no description as to how the sensor unit transmits a high-frequency signal containing air pressure data.

As described above, the above publication does not disclose any configuration for allowing the system to effectively exert both of the function as a keyless entry device and the function as a tire condition monitoring apparatus.

US 2004/0095231 A1, accroding to the preamble of claim 1, discloses that a portable transmitter transmits a signal to a receiving device located in a vehicle body and that each of a plurality of tire sensor units transmits a signal to the receiving device. The carrier frequency of the signal transmitted from each tire sensor unit is the same as that of the signal transmitted from the portable transmitter.

US 2003/0046993 A1 discloses a portable unit transmitting a high frequency signal to any one of four antennas of a main unit located in a vehicle body, and each of a plurality of tire pressure transmitters transmits a high frequency signal to the corresponding antenna.

### SUMMARY OF THE INVENTION

Accordingly, it is an objective of the present invention to provide a tire condition monitoring apparatus with keyless entry function that is capable of effectively exerting both of the functions of a keyless entry device and a tire condition monitoring apparatus, while simplifying the structure and reducing costs.

The above-mentioned object of the present invention is attained by providing a tire condition monitoring apparatus as defined in the appended claim 1.

To achieve the foregoing objective and in accordance with one aspect of the present invention, a tire condition monitoring apparatus with a keyless entry function is provided that includes a keyless entry portable communication device capable of transmitting and receiving high frequency signals, a plurality of sensor units each being attachable to a wheel of the vehicle, a plurality of antennas each arrangeable in the vehicle body to correspond to one of the wheels, and a control unit locatable in the vehicle body and connected to the antennas. Each sensor unit detects the condition of a tire attached to the wheel and transmits, as a high frequency signal, a condition data signal that contains data representing the detected tire condition. In response to the reception of a command signal, which is a high frequency signal, the sensor unit executes operation in accordance with the command content in the command signal. When operated, the control unit executes a keyless entry function based on transmission and reception of high frequency signals with the portable communication device via at least one of the antennas, and the control unit transmits the command signal to each of the sensor units via the corresponding antenna and processing the condition data signal received from each of the sensor units via the corresponding antenna.

According to the above configuration, the antennas are arranged in the vehicle body to correspond to the vehicle wheels, and the control unit transmits and receives high-frequency signals with the portable communication device and with the sensor units through the antennas. That is, the antennas, each of which is arranged to correspond to one of the vehicle wheels, are used not only for receiving signals from the portable communication device and the sensor units, but also for transmitting signals to the portable communication device and the sensor units. Therefore, transmission and reception of signals between the portable communication device and the control unit and transmission and reception of signals between the sensor units and the control unit can be executed by the minimum number of antennas, which simplifies the structure and reduces costs. Further, signals sent from the portable communication device and the sensor units to the control unit, and signals sent from the control unit to the portable communication device and the sensor units are both high-frequency signals. Thus, compared to a case where high-frequency signals are used as signals sent from one of two devices to the other, and low-frequency signals are used as signals sent from the latter to the former, the configuration related to signal transmission and reception is simplified, so that costs are reduced.

In addition, the control unit executes the keyless entry function based on transmission and reception of high-frequency signals with the portable communication device via at least one of the antennas, and sends a command signal to each of the sensor unit via the corresponding antenna. Upon receiving the command signal, the sensor unit executes an operation that corresponds to the command content of the command signal. Therefore, the control unit is capable of controlling operation of the sensor units such that the sensor units operate in accordance with the conditions of the vehicle to which the control unit is mounted. Therefore, the apparatus is capable of effectively exerting both of a function as a keyless entry device and a function as a tire condition monitoring apparatus.

According to the present invention, the portable communication device, the sensor units and the control unit may be configured to transmit high frequency signals having the same carrier frequency. This configuration further simplifies the configuration related to signal transmission and reception, and thus reduces costs.

According to the present invention, the control unit preferably transmits the command signals via the antennas, the command signals containing a different identification code for each antenna. Each sensor unit transmits to the corresponding antenna the condition data signal containing the identification code contained in the command signal received from the corresponding antenna.

According to the above configuration, the control unit receives a condition data signal that contains the identification code contained in a command signal transmitted by the control unit itself, thereby reliably determining that the received condition data signal is the signal that has been transmitted in response to a command signal transmitted by the control unit. This eliminates the necessity for previously storing identification codes in the sensor units and registering the identification codes of the sensor units in the control unit.

In the above configuration, the control unit may change the identification code contained in the command signal each time when transmitting the command signal via each antenna.

If the control unit is configured to constantly transmit a command signal containing the same identification code through the antennas, the number of bits of the identification code needs to be relatively great so as to prevent a third person from obtaining the identification code and the identification code from being the same as the identification code contained in a command signal or a condition data signal transmitted from another vehicle. In contrast, according to the above configuration, the identification code is changed each time a command signal is sent via each antenna. In this case, even if the number of bits of the identification code is relatively small, it is unlikely that the identification code will be known to a third person. Also, it is unlikely that the identification code will match an identification code contained in a command signal or a condition data signal transmitted at the same timing from another vehicle.

According to the present invention, the antennas are preferably out-of-cabin antennas, and the tire condition monitoring apparatus preferably further includes an in-cabin antenna connected to the control unit. The control unit determines that the portable communication device is outside the passenger compartment when transmission and reception of high frequency signals with the portable communication device via at least one of the out-of-cabin antennas is established, and determines that the portable communication device is in the passenger compartment when transmission and reception of high frequency signals with the portable communication device via the in-cabin antenna is established. This configuration allows reliable determination of whether the portable communication device is outside or inside the passenger compartment.

In the above configuration, the field intensity of the high-frequency signal transmitted via each out-of-cabin antenna is preferably adjusted to a value that is sufficient to allow the high-frequency signal to reach a predetermined range outside the passenger compartment that includes the wheel corresponding to the out-of-cabin antenna. In contrast, the field intensity of the high-frequency signal transmitted via the in-cabin antenna is preferably adjusted to a level that is sufficient to reach the passenger compartment but insufficient to reach outside the passenger compartment.

However, depending on the situation, there is a possibility that transmission and reception of high-frequency signals is established between the portable communication device outside the passenger compartment and the in-cabin antenna, or that such transmission and reception is established between the portable communication device inside the passenger compartment and the out-of-cabin antenna. In these cases, the location of the portable communication device will be erroneously determined.

Accordingly, in accordance with one aspect of the present invention, the control unit transmits a first request signal, which is a high frequency signal, via each of the out-of-cabin antennas, and simultaneously transmits a second request signal, which is a high frequency signal, via the in-cabin antenna. In response to the reception of the first request signal, the portable communication device transmits a first response signal, which is a high frequency signal, while, in response to the reception of the second request signal, transmits a second response signal, which is a high frequency signal. The control unit determines whether the portable communication device is located inside or outside the passenger compartment based on whether a high-frequency signal received via at least one of the out-of-cabin antennas or the in-cabin antenna is the first response signal or the second response signal.

For example, a case will be discussed below related to the above configuration, in which, with the portable communication device located outside the passenger compartment, the first request signal is transmitted from each out-of-cabin antenna, and, simultaneously, the second request signal is transmitted from the in-cabin antenna. In this case, the field intensity of the first request signal is greater than the field intensity of the second request signal outside the passenger compartment. Therefore, the first request signal greatly interferes with the second request signal, thereby preventing the second request signal from being received by the portable communication device located outside the passenger compartment. Further, outside the passenger compartment, the extent of the interference applied on the first request signal by the second request signal is relatively small. Therefore, the portable communication device located outside the passenger compartment is capable of reliably receiving the first request signal from the out-of-cabin antenna and transmitting the first response signal.

In contrast, in a case where the portable communication device is in the passenger compartment, the field intensity of the second request signal is greater than the field intensity of the first request signal inside the passenger compartment. Therefore, the second request signal greatly interferes with the first request signal, thereby preventing the first request signal from being received by the portable communication device located inside the passenger compartment. Further, inside the passenger compartment, the extent of the interference applied on the second request signal by the first request signal is relatively small. Therefore, the portable communication device located inside the passenger compartment is capable of reliably receiving the second request signal from the in-cabin antenna and transmitting the second response signal.

This configuration allows the control unit to further accurately determine whether the portable communication device is outside or inside the passenger compartment.

According to the present invention, the configuration having the in-cabin antenna described above may be replaced by a configuration in which the control unit determines whether the portable communication device is outside or inside the passenger compartment based on the intensity of a high frequency signal received from the portable communication device via any of the antennas. This minimizes the number of antennas, thereby simplifying the structure.

According to the present invention, the command signal preferably includes a start signal and a stop signal. The control unit transmits the start signal via each of the antennas when the ignition switch of the vehicle is turned on, and transmitting the stop signal via each of the antennas when the ignition switch is turned off. Also, each sensor unit is switched to a transmission mode to transmit the condition data signal in response to the reception of the start signal, and is switched to a stop mode to refrain from transmitting the condition data signal in response to the reception of the stop signal.

According to the above configuration, when the ignition switch is turned on, that is, when the owner of the portable communication device (driver) gets on the vehicle and starts the vehicle engine, each sensor unit is switched to the transmission mode, in which the sensor unit sends a condition data signal. Therefore, the driver is capable of reliably obtaining the conditions of the tires of the vehicle that he/she is driving when the vehicle engine is started. On the other hand, when the ignition switch is turned off, that is, when the driver stops the engine of the vehicle, each sensor unit is switched to a stop mode, in which the sensor unit does not transmit condition data signal. That is, the driver does not need to know the tire conditions when, for example, the vehicle is stropped, in such a case, the sensor units do not transmit signals. Typically, the sensor unit arranged inside each tire is driven by a battery. Thus, the configuration that suspends the transmission when it is not really necessary is advantageous in extending the life of the battery.

The present invention may be configured such that, when switched to the transmission mode, each sensor unit periodically transmits the condition data signal at predetermined time intervals. This configuration allows the driver of the vehicle to periodically obtain the tire conditions while the vehicle is traveling.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings.
Fig. 1 is a schematic diagram illustrating a vehicle on which is mounted a tire condition monitoring apparatus having a keyless entry function according to one embodiment of the present invention;
Fig. 2 is a block diagram showing a circuit configuration of the portable communication device of Fig. 1;
Fig. 3 is a block diagram showing a circuit configuration of the sensor unit of Fig. 1; and
Fig. 4 is a timing chart showing an example of operation of the apparatus shown in Fig. 1.

### DETAILED DESCRIPTION OF THE PREFERRED EMBODIMENTS

One embodiment of the present invention will now be described with reference to the drawings.

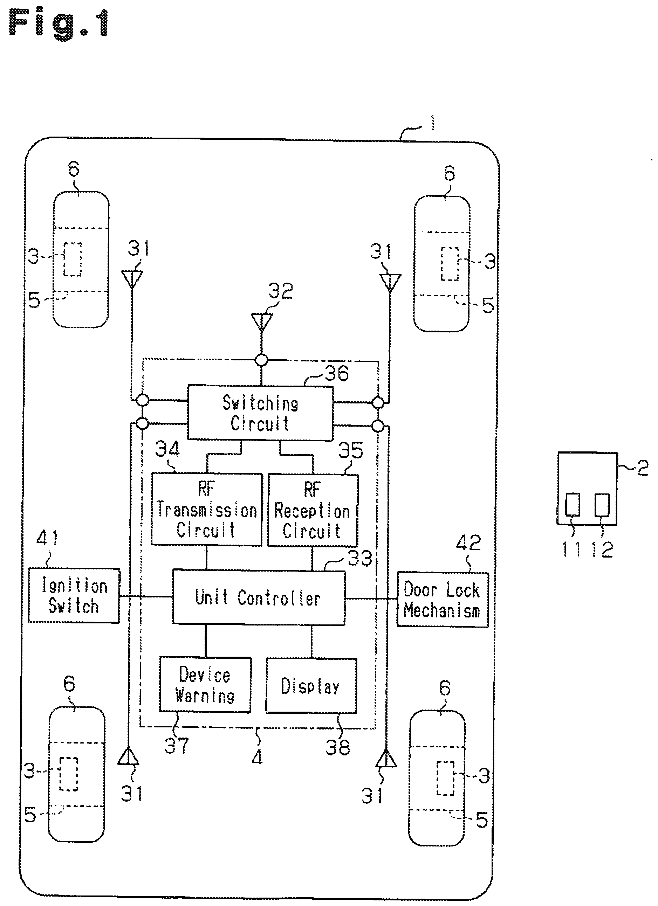

Fig. 1 shows a vehicle 1 on which is mounted a tire condition monitoring apparatus having a keyless entry function. The tire condition monitoring device includes a keyless entry portable communication device 2 carried by the owner (driver) of the vehicle 1, four sensor units 3 attached to the four wheels 5 of the vehicle 1, and a control unit 4 mounted on the body of the vehicle 1.

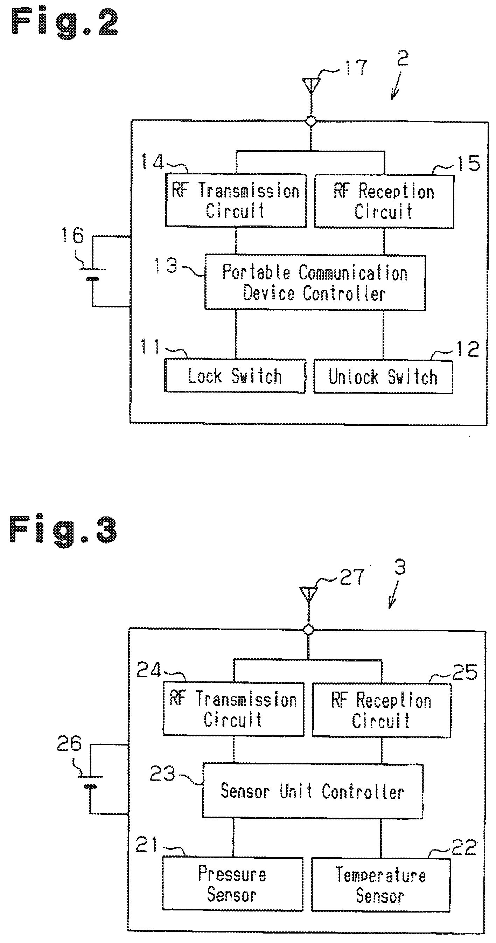

The portable communication device 2 is configured to transmit high-frequency signals (hereinafter, referred to as RF signals) to the control unit 4, and receive RF signals from the control unit 4. As shown in Fig. 2. the portable communication device 2 includes a lock switch 11, an unlock switch 12, a portable communication device controller 13, an RF transmission circuit 14, and an RF reception circuit 15, and incorporates a battery 16. The portable communication device 2 is driven by the electricity supplied by the battery 16.

When locking the vehicle doors by remote control, the lock switch 11 is pressed by the owner of the vehicle 1. When unlocking the vehicle doors by remote control, the unlock switch 12 is pressed by the owner of the vehicle 1. The portable communication device controller 13 is configured by a microcomputer including a CPU, a RAM, and a ROM. An ID code (identification code), which is unique identification information, is registered in the ROM. The ID code is information used to identify the portable communication device 2 by the control unit 4.

When the lock switch 11 is pressed, the portable communication device controller 13 generates a lock signal containing the ID code. When the unlock switch 12 is pressed, the portable communication device controller 13 generates an unlock signal containing the ID code. The RF transmission circuit 14 modulates the lock signal and the unlock signal generated by the portable communication device controller 13 into RF signals having a predetermined carrier frequency, and wirelessly transmits the RF signals from the antenna 17.

The RF reception circuit 15 demodulates RF signals (for example, request signals discussed below) received from the control unit 4 via the antenna 17, and sends the demodulated signals to the portable communication device controller 13. In response to the reception of a request signal from the control unit 4, the portable communication device controller 13 generates a response signal containing the ID code. The RF transmission circuit 14 modulates the response signal generated by the portable communication device controller 13 into an RF signal having a predetermined carrier frequency, and wirelessly transmits the RF signal from the antenna 17. In the present embodiment, the RF transmission circuit 14 is configured to modulate all the lock signal, the unlock signal, and the response signal into RF signals having the same carrier frequency by the frequency-shift keying (FSK).

As shown in Fig. 1, each sensor unit 3 is secured to the wheel 5, on which the tire 6 is mounted, so as to be arranged inside the tire 6. Each sensor unit 3 detects the condition (for example, the internal air pressure and the internal temperature) of the corresponding tire 6, and wirelessly transmits a signal including data representing the detected tire condition, that is, the tire condition data signal.

As shown in Fig. 3, each sensor unit 3 includes a pressure sensor 21, a temperature sensor 22, a sensor unit controller 23, an RF transmission circuit 24, and an RF reception circuit 25, and incorporates a battery 26. The sensor unit 3 is driven by the electricity supplied by the battery 26.

The pressure sensor 21 measures the internal air pressure of the corresponding tire 6, and outputs the air pressure data obtained by the measurement to the sensor unit controller 23. The temperature sensor 22 measures the internal temperature of the corresponding tire 6, and outputs the temperature data obtained by the measurement to the sensor unit controller 23. The sensor unit controller 23 is configured by a microcomputer including a CPU, a RAM, and a ROM. An ID code (identification code), which is unique identification information, is registered in the ROM. The ID code is information used at the control unit 4 to identify the sensor unit 3.

The sensor unit controller 23 generates a tire condition data signal that contains air pressure data, temperature data, and an ID code, and sends the tire condition data signal to the RF transmission circuit 24. The RF transmission circuit 24 modulates the tire condition data signal received from the sensor unit controller 23 to an RF signal having a predetermined carrier frequency, and wirelessly transmits the RF signal from the antenna 27. In the present embodiment, the RF transmission circuit 24 is configured to modulate the tire condition data signal to an RF signal having the same carrier frequency as the FR signal transmitted by the portable communication device 2 by the frequency-shift keying (FSK).

The RF reception circuit 25 demodulates RF signals (for example, command signals discussed below) received from the control unit 4 via the antenna 27, and sends the demodulated signals to the sensor unit controller 23. In response to the reception of a command signal from the control unit 4, the sensor unit controller 23 causes the sensor unit 3 to execute operation in accordance with the command content in the command signal. Specifically, the command signal transmitted by the control unit 4 includes a start signal and a stop signal. In response to the reception of the start signal from the control unit 4, the sensor unit controller 23 switches the operation mode of the sensor unit 3 to a transmission mode, in which the sensor unit 3 transmits tire condition data signals. On the other hand, in response to the reception of the stop signal from the control unit 4, the sensor unit controller 23 switches the operation mode of the sensor unit 3 to a stop mode in which the sensor unit 3 does not transmit the tire condition data signal. In this manner, the sensor unit controller 23 switches the transmission mode of the tire condition data signal in response to the reception of a command signal from the control unit 4.

When switched to the transmission mode, each sensor unit 3 executes tire condition measuring operation periodically at first predetermined time intervals (for example. 15-second intervals), and executes transmitting operation of the tire condition data signal periodically at second predetermined time intervals (for example, one-minute intervals), which is longer than the first predetermined time intervals. However, if the measured tire condition indicates an abnormality (for example, abnormal decrease in the internal pressure of the tire 6 or rapid change in the internal pressure of the tire 6), the sensor unit 3 immediately executes transmitting operation regardless of the periodical transmitting operation. On the other hand, when switched to the stop mode, each sensor unit 3 does not execute transmission operation of the tire condition data signal. However, when switched to the stop mode, the sensor unit 3 may execute the periodic measurement of the tire condition as in the transmission mode. Alternatively, when switched to the stop mode, the sensor unit 3 does not need to execute the periodic measurement.

As shown in Fig. 1, the control unit 4 is arranged at a predetermined position on the vehicle body, and is operated by, for example, power from the battery (not shown) of the vehicle 1. The control unit 4 includes four out-of-cabin antennas 31 each located at a position in the vehicle body in the vicinity of one of the wheels 5, and an in-cabin antenna 32 arranged at a given position in the passenger compartment. The control unit 4 executes a keyless entry function based on transmission and reception of RF signals with the portable communication device 2 through the antennas 31, 32. The control unit 4 also transmits the command signal to each sensor unit 3 through the corresponding out-of-cabin antenna 31, and receives the tire condition data signal from each sensor unit 3 through the corresponding out-of-cabin antenna 31 to process the tire condition signal.

The control unit 4 includes a unit controller 33, an RF transmission circuit 34, an RF reception circuit 35, a switching circuit 36, a warning device 37, and a display 38. The antennas 31, 32 are connected to the switching circuit 36. The switching circuit 36 operates to switch the connection mode of the antennas 31, 32 with the RF transmission circuit 34 and the RF reception circuit 35 The unit controller 33 is configured by a microcomputer including a CPU, a ROM, and a RAM, and generates the request signal and the command signal (the start signal and the stop signal). The RF transmission circuit 34 modulates each of the request signal and the command signal into an RF signal having a predetermined carrier frequency, and outputs the RF signal to the switching circuit 36. The switching circuit 36 causes the out-of-cabin antennas 31 and the in-cabin antenna 32 to wirelessly transmit the request signal, while causing the out-of-cabin antennas 31 to wirelessly transmit the command signal. In the present embodiment, the RF transmission circuit 34 is configured to modulate the request signal and the command signal to RF signals having the same carrier frequency as the FR signal transmitted by the portable communication device 2 by the frequency-shift keying (FSK).

The RF transmission circuit 34 adjusts the field intensity of the RF signals (the request signal and the command signal) transmitted to the outside of the passenger compartment through the out-of-cabin antennas 31 to a value that is sufficient to allow the RF signal to reach a predetermined range outside the passenger compartment that includes the wheel 5 corresponding to each out-of-cabin antenna 31. On the other hand, the RF transmission circuit 34 adjusts the field intensity of the RF signal transmitted via the in-cabin antenna 32 to a level that is insufficient to reach outside the passenger compartment.

The unit controller 33 generates the request signal at predetermined time intervals (for example, 200 us). The unit controller 33 is also connected to an ignition switch 41 manipulated by the driver to start and stop an engine mounted on the vehicle. When the ignition switch 41 is turned on to start the engine, the unit controller 33 generates the start signal. When the ignition switch 41 is turned off, the unit controller 33 generates the stop signal.

The RF reception circuit 35 demodulates RF signals (a response signal, a lock signal, and an unlock signal) received from the portable communication device 2 via the antennas 31, 32 and the switching circuit 36, and sends the demodulated signals to the unit controller 33. When receiving an RF signal, the unit controller 33 determines whether the ID code contained in the RF signal matches with the ID code stored in the unit controller 33 in advance. When they match, the unit controller 33 determines that the source of the RF signal is the proper portable communication device 2. When receiving a response signal via at least one of the out-of-cabin antennas 31, the unit controller 33 determines that the portable communication device 2 is outside the passenger compartment and in the vicinity of the vehicle 1. In contrast, the unit controller 33 determines that the portable communication device 2 is in the passenger compartment when receiving a response signal via the in-cabin antenna 32. Only when receiving a response signal from the proper portable communication device 2 via the in-cabin antenna 32, the unit controller 33 allows the engine to be started at turning on of the ignition switch 41.

The unit controller 33 is connected to a door lock mechanism 42, which locks and unlocks the doors of the vehicle 1. When receiving a response signal from the proper portable communication device 2 via at least one of the out-of-cabin antennas 31, the unit controller 33 activates the door iock mechanism 42 if somebody touches a door handle of a door of the vehicle 1, thereby switching the doors from the locked state to the unlocked state or from the unlocked state to the locked state. Also, when receiving a lock signal from the proper portable communication device 2 via at least one of the out-of-cabin antennas 31, the unit controller 33 causes the door lock mechanism 42 to lock the doors. In contrast, when receiving an unlock signal from the proper portable communication device 2 via at least one of the out-of-cabin antennas 31, the unit controller 33 causes the door lock mechanism 42 to unlock the doors.

The RF reception circuit 35 demodulates an RF signal (a tire condition data signal) received from each sensor unit 3 via the corresponding out-of-cabin antenna 31 and the switching circuit 36, and sends the demodulated signal to the unit controller 33. Based on the tire condition data signal from the RF reception circuit, the unit controller 33 obtains the internal pressure and the internal temperature of the tire 6 that is associated with the sensor unit 3 that is the source of the received signal.

The unit controller 33 also displays information regarding the internal air pressure and the internal temperature on the display 38. The display 38 is arranged in the view of an occupant of the vehicle 1 such as in the passenger compartment. The unit controller 33 further informs the occupant of an abnormality in the internal air pressure and the internal temperature by a warning device (alarm) 37. For example, a device that alerts the occupant of an abnormality by sound, or a device that alerts the occupant of an abnormality by light is applicable as the warning device 37. An abnormality in the internal air pressure andior the internal temperature of the tire 6 may be displayed on the display 38, which serves as the alarm.

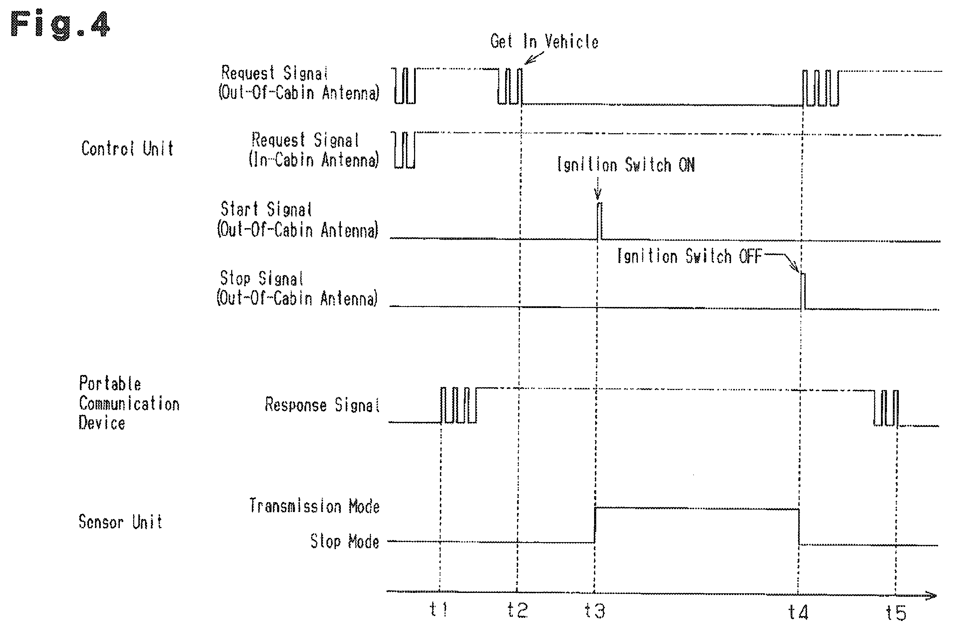

Hereafter, an operation of the device according to the present embodiment will be described with reference to Fig. 4.

As shown in Fig. 4, when the owner of the vehicle 1 who carries the portable communication device 2 is outside the vehicle 1, and the vehicle 1 is not moving, the control unit 4 transmits a request signal at predetermined time intervals (for example, 200 ms) through the out-of-cabin antennas 31 and the in-cabin antenna 32. If the vehicle owner carrying the portable communication device 2 approaches the vehicle 1, and the device 2 receives a request signal from at least one of the out-of-cabin antennas 31, the device 2 transmits a response signal (time point t1). When the response signal is received by at least one of the out-of-cabin antennas 31, the control unit 4 checks the ID code contained in the response signal against the ID code stored in the control unit 4 in advance. If the ID codes match, the control unit 4 determines that the source of the response signal is the proper portable communication device 2. Transmission and reception of request signals and response signals is continued as long as the portable communication device 2 is in the reception area of request signals from the out-of-cabin antennas 31 or the in-cabin antenna 32. If the owner touches a door handle of the vehicle 1 in this state, the door lock mechanism 42 is activated to unlock the doors.

Thereafter, when the owner opens the door and gets in the vehicle (time point t2), the portable communication device 2 transmits a response signal in response to the reception of the request signal from the in-cabin antenna 32. When the response signal is received by the in-cabin antenna 32, the control unit 4 determines that the owner has entered the passenger compartment and stops transmitting the request signals from the out-of-cabin antennas 31.

Subsequently, when the ignition switch 41 is turned on, the control unit 4 transmits a start signal through each out-of-cabin antenna 31 (time point t3). Then, in response to the reception of the start signal from the corresponding out-of-cabin antenna 31, each sensor unit 3 is switched to the transmission mode and starts periodical transmission of the tire condition data signal. The tire condition data signal transmitted by each sensor unit 3 is received by the corresponding out-of-cabin antenna 31. This allows the control unit 4 to obtain the internal pressure and internal temperature of the tire 6 that is associated with the sensor unit 3 that is the source of the received signal.

Thereafter, when the ignition switch 41 is turned off, the control unit 4 transmits a stop signal through each out-of-cabin antenna 31 (time point t4). Then, in response to the reception of the stop signal from the corresponding out-of-cabin antenna 31, each sensor unit 3 is switched to the stop mode and stops periodical transmission of the tire condition data signal. At the same time, the control unit 4 resumes transmission of the request signals from the out-of-cabin antennas 31.

Thereafter, if the owner gets out of the vehicle 1 and touches a door handle of the vehicle 1, the door lock mechanism 42 is activated to lock the doors. When the owner moves away from the vehicle 1, so that the portable communication device 2 exits the reception area of the request signals of the out-of-cabin antennas 31, the portable communication device 2 ceases transmitting the response signal (time point t5).

The present embodiment described above provides the following advantages.
(1) In the present embodiment, the out-of-cabin antennas 31 are arranged in the vehicle body to correspond to each of the wheels 5 of the vehicle 1, and the control unit 4 transmits and receives RF signals with the portable communication device 2 and with the sensor units 3 through the out-of-cabin antennas 31. That is, the out-of-cabin antennas 31, each of which is arranged to correspond to one of the wheels 5 of the vehicle 1, are used not only for receiving signals transmitted by the portable communication device 2 and the sensor units 3, but also for transmitting signals to the portable communication device 2 and the sensor units 3. Therefore, transmission and reception of signals between the portable communication device 2 and the control unit 4 and transmission and reception of signals between the sensor units 3 and the control unit 4 can be executed by the minimum number of antennas, which simplifies the structure and reduces costs. Further, signals sent from the portable communication device 2 and the sensor units 3 to the control unit 4, and signals sent from the control unit 4 to the portable communication device 2 and the sensor units 3 are both RF signals. Thus, compared to a case where RF signals are used as signals sent from one of two devices to the other, and LF signals (low-frequency signals) are used as signals sent from the latter to the former, the configuration related to signal transmission and reception is simplified, so that costs are reduced.
   In addition, the control unit 4 executes the keyless entry function based on transmission and reception of RF signals with the portable communication device 2, via at least one of the out-of-cabin antennas 31, and sends a command signal (a start signal and a stop signal) to the sensor units 3 through the out-of-cabin antennas 31. Upon receiving the command signal, the sensor unit 3 executes an operation that corresponds to the command content of the command signal. Therefore, the control unit 4 is capable of controlling operation of the sensor units 3 such that the sensor units 3 operate in accordance with the conditions of the vehicle 1 to which the control unit 4 is mounted. Therefore, the apparatus is capable of effectively exerting both of a function as a keyless entry device and a function as a tire condition monitoring apparatus.
(2) The portable communication device 2, the sensor units 3, and the control unit 4 are configured to transmit RF signals of the same carrier frequency. This further simplifies the configuration related to signal transmission and reception, and thus reduces costs.
(3) The control unit 4 is connected to the in-cabin antenna 32. The control unit 4 determines that the portable communication device 2 is outside the passenger compartment when transmission and reception of RF signals (a request signal and a response signal) with the portable communication device 2 via at least one of the out-of-cabin antennas 31 is established. In contrast, the control unit 4 determines that the portable communication device 2 is inside the passenger compartment when transmission and reception of RF signals (a request signal and a response signal) with the portable communication device 2 via the in-cabin antenna 32 is established. This configuration allows reliable determination of whether the potable communication device 2 is outside or inside the passenger compartment.
(4) When the ignition switch 41 is turned on, that is, when the owner of the portable communication device 2 (driver) gets on the vehicle and starts the vehicle engine, each sensor unit 3 is switched to the transmission mode, in which the sensor unit 3 sends a condition data signal. Therefore, the driver is capable of reliably obtaining the conditions of the tires 6 of the vehicle 1 that he/she is driving when the vehicle engine is started. On the other hand, when the ignition switch 41 is turned off, that is, when the driver stops the engine of the vehicle 1, each sensor unit 3 is switched to a stop mode, in which the sensor unit 3 does not transmit tire condition data signal. That is, the driver does not need to know the conditions of the tires 6 when, for example, the vehicle 1 is stopped. In such a case, the sensor units 3 do not transmit signals. The sensor unit 3 arranged inside each tire 6 is driven by the battery 26. Thus, the configuration that suspends the transmission when it is not really necessary is advantageous in extending the life of the battery 26.
(5) When switched to the transmission mode, each sensor unit 3 periodically transmits the tire condition data signal at predetermined time intervals. This allows the driver of the vehicle 1 to periodically obtain the tire conditions of the tires 6 while the vehicle 1 is traveling.
(6) At least from when the ignition switch 41 is turned on to when it is turned off, that is, at least while the sensor units 3 are in the transmission mode, the transmission of the request signal from the out-of-cabin antennas 31 is suspended. Therefore, while the sensor units 3 are in the transmission mode, the tire condition data signal transmitted from each sensor unit 3 is reliably received by the corresponding out-of-cabin antenna 31.

The above described embodiment may be modified as follows.

In the above embodiment, the time point at which the transmission of the request signal from the out-of-cabin antennas 31 is stopped does not need to be the time point at which the owner of the portable communication device 2 enters the passenger compartment (time point t2 in Fig. 4), but may be the time point at which the ignition switch 41 is turned on (time point t3 in Fig. 4). The time point at which the transmission of the request signal from the out-of-cabin antennas is resumed does not need to be the time point at which the ignition switch 41 is turned off (time point t4 in Fig. 4), but may be a time point at which the owner of the portable communication device 2 exits the passenger compartment, that is, a time point at which the in-cabin antenna 32 is no longer able to receive the response signal from the portable communication device 2. In other words, the time point may be changed as long as the transmission of the request signal from the out-of-cabin antennas 31 is suspended at least from when the ignition switch 41 is turned on to when it is turned off, that is, at least while the sensor units 3 are in the transmission mode.

As described above, the field intensity of the RF signal transmitted via each out-of-cabin antenna 31 is adjusted to a value that is sufficient to allow the RF signal to reach a predetermined range outside the passenger compartment that includes the wheel 5 corresponding to the out-of-cabin antenna 31. in contrast, the field intensity of the RF signal transmitted via the in-cabin antenna 32 is adjusted to a level that is sufficient to reach the passenger compartment but insufficient to reach outside the passenger compartment. However, depending on the situation, there is a possibility that transmission and reception of RF signals is established between the portable communication device 2 outside the passenger compartment and the in-cabin antenna 3, or that such transmission and reception is established between the portable communication device 2 inside the passenger compartment and the out-of-cabin antenna 31. In these cases, the location of the portable communication device 2 will be erroneously determined.

To prevent such erroneous determinations, the hollowing configuration may be employed. That is, the control unit 4 is configured to transmit the first request signal, which is an RF signal, via the out-of-cabin antennas 31, while simultaneously transmitting the second request signal, which is an RF signal, via the in-cabin antenna 32. The first and second request signals are configured to be distinguishable from each other. In response to the reception of the first request signal, the portable communication device 2 transmits a first response signal, which is an RF signal, while, in response to the reception of the second request signal, transmits a second response signal, which is an RF signal. The first and second response signals are configured to be distinguishable from each other. When receiving the first response signal via at least one of the out-of-cabin antennas 31, the control unit 4 determines that the portable communication device 2 is outside the passenger compartment. When receiving the second response signal via the in-cabin antenna 32, the control unit 4 determines that the portable communication device 2 is in the passenger compartment.

For example, a case will be discussed below related to the above configuration, in which, with the portable communication device 2 located outside the passenger compartment, the first request signal is transmitted from the out-of-cabin antenna 31, and, simultaneously, the second request signal is transmitted from the in-cabin antenna 32. In this case, the field intensity of the first request signal is greater than the field intensity of the second request signal outside the passenger compartment. Therefore, the first request signal greatly interferes with the second request signal, thereby preventing the second request signal from being received by the portable communication device 2 located outside the passenger compartment. Further, outside the passenger compartment, the extent of the interference applied on the first request signal by the second request signal is relatively small. Therefore, the portable communication device 2 located outside the passenger compartment is capable of reliably receiving the first request signal from the out-of-cabin antenna 31 and transmitting the first response signal.

In contrast, in a case where the portable communication device 2 is in the passenger compartment, the field intensity of the second request signal is greater than the field intensity of the first request signal inside the passenger compartment. Therefore, the second request signal greatly interferes with the first request signal, thereby preventing the first request signal from being received by the portable communication device 2 located inside the passenger compartment. Further, inside the passenger compartment, the extent of the interference applied on the second request signal by the first request signal is relatively small. Therefore, the portable communication device 2 located inside the passenger compartment is capable of reliably receiving the second request signal from the in-cabin antenna 32 and transmitting the second response signal.

This configuration allows the control unit 4 to further accurately determine whether the portable communication device 2 is outside or inside the passenger compartment. According to this configuration also, the transmission of the first request signal from the out-of-cabin antennas 31 is preferably suspended at least from when the ignition switch 41 is turned on to when it is turned off.

Generally, the ID codes of the four sensor units 3 attached to the four wheels 5 of the vehicle 1 are registered in the control unit 4, while being associated with the positions of the wheels 5. When receiving the tire condition data signal from each sensor unit 3, the control unit 4 identifies the sensor unit 3 that is the source of the tire condition data signal based on the ID code contained in the signal, and identifies the wheel 5 to which the identified sensor unit 3 is attached. However, the registering operation of the ID code to the control unit 4 needs to be executed each time the wheels 5 are changed or the sensor unit 3 is replaced, which is significantly troublesome.

In this regard, to eliminate the necessity for the ID code registering operation, the configuration shown below may be employed. That is, the control unit 4 is configured to transmit command signals containing mutually different ID codes through the respective out-of-cabin antennas 31. Each sensor unit 3 is configured to transmit, to the corresponding out-of-cabin antenna 31. the tire condition data signal containing the ID code contained in the command signal received from the corresponding out-of-cabin antenna 31. Also, each sensor unit 3 stores the ID code contained in the received command signal in a memory of its own.

According to the above configuration, the control unit 4 receives a tire condition data signal that contains the ID code contained in a command signal transmitted by the control unit itself. thereby reliably determining that the received tire condition data signal is the signal that has been transmitted in response to a command signal transmitted by the control unit. For example, in a case where the out-of-cabin antenna 31 that corresponds to the front right wheel 5 shown in Fig. 1 transmits a command signal, the sensor unit 3 attached to the front right wheel 5 transmits, to the out-of-cabin antenna 31 that corresponds to the front right wheel 5, a tire condition data signal that contains the ID code contained in the command signal. As a result, based on the ID code contained in the tire condition data signal received via the out-of-cabin antenna 31, the control unit 4 can determine that the received tire condition data signal has been transmitted by the sensor unit 3 attached to front right wheel 5. This eliminates the necessity for previously storing ID codes in the sensor units 3 and registering the ID codes of the sensor units 3 in the control unit 4.

In the illustrated configuration, the control unit 4 may be configured to change the ID code contained in a command signal each time it transmits the command signal via each out-of-cabin antenna 31. In this case, each sensor unit 3 renews the ID code in the memory each time receiving a command signal containing a new ID code.

If the control unit 4 is configured to constantly transmit a command signal containing the same ID code through the out-of-cabin antennas 31, the number of bits of the ID code needs to be relatively great so as to prevent a third person from obtaining the ID code and the ID code from being the same as the ID code contained in a command signal or a condition data signal transmitted from another vehicle. In contrast, according to the above configuration, the ID code is changed each time a command signal is sent via each out-of-cabin antenna 31. In this case, even if the number of bits of the ID code is relatively small, it is unlikely that the ID code will be known to a third person. Also, it is unlikely that the ID code will match an ID code contained in a command signal or a tire condition data signal transmitted at the same timing from another vehicle. This shortens the transmission time of signals, thereby extending the life (or reducing the size) of the battery 26 in each sensor unit 3.

As long as the sensor unit 3 executes operation in accordance with the command content in the command signal in response to the reception of a command signal from the control unit 4, the command content may be changed as necessary. For example, when receiving the start signal discussed above, as a command signal, the sensor unit 3 may be switched to an operation mode instead of the transmission mode for periodic transmissions. In the operation mode, the sensor unit 3 executes the transmission operation once or a few times only immediately after receiving the start signal.

The in-cabin antenna 32 may be omitted. In this case, based on the intensity of the RF signal (response signal) received from the portable communication device 2 via each out-of-cabin antenna 31, the control unit 4 determines whether the portable communication device 2 is outside or inside the passenger compartment. This minimizes the total number of antennas, thereby further simplifying the structure. In this case, regardless of whether the portable communication device 2 is located outside or inside the passenger compartment, request signals are constantly transmitted by the out-of-cabin antennas 31.

In the illustrated embodiment, the frequency-shift keying (FSK) is employed to modulate signals. However, any other shift keying such as the amplitude-shift keying (ASK) or the phase-shift keying (PSK) may be employed.

## Claims

1. A tire condition monitoring apparatus with a keyless entry function, comprising:
a keyless entry portable communication device (2) capable of transmitting and receiving signals;
a plurality of sensor units (3) each being attachable to a wheel (5) of the vehicle (1), each sensor unit (3) detecting the condition of a tire (6) attached to the wheel (5) and transmitting a condition data signal that contains data representing the detected tire condition, wherein, in response to the reception of a command signal the sensor unit (3) can execute operation in accordance with the command content in the command signal;
a plurality of antennas (31) each arrangeable in the vehicle body to correspond to one of the wheels (5); and
a control unit (4) locatable in the vehicle body and connected to the antennas (31), the control unit (4) when operated executing a keyless entry function based on transmission and reception of signals with the portable communication device (2) via at least one of the antennas (31), and the control unit (4) transmitting the command signal to each of the sensor units (3) via the corresponding antenna (31) and processing the condition data signal received from each of the sensor units (3) via the corresponding antenna (31), **characterized in that**
the keyless entry portable communication device (2) is arranged to transmit and receive high frequency signals, **in that** each sensor unit (3) is arranged to transmit the condition data signal in the form of a high frequency signal, **in that** the control unit (4) is arranged to execute the keyless entry function based on transmission and reception of high frequncy signals with the portable communication device (2) via the at least one of the antennas (31), and **in that** the control unit (4) is arranged to transmit the command signal in the form of a high frequency signal to each of the sensor units (3) via the corresponding antenna.

2. The tire condition monitoring apparatus according to claim 1, wherein the portable communication device (2), the sensor units (3) and the control unit (4) are configured to transmit high frequency signals having the same carrier frequency.

3. The tire condition monitoring apparatus according to claim 1, wherein the control unit (4) can transmit the command signals via the antennas (31), the command signals containing a different identification code for each antenna (31), each sensor unit (3) transmitting to the corresponding antenna (31) the condition data signal containing the identification code contained in the command signal received from the corresponding antenna (31).

4. The tire condition monitoring apparatus according to claim 3, wherein the control unit (4) can change the identification code contained in the command signal each time when transmitting the command signal via each antenna (31).

5. The tire condition monitoring apparatus according to claim 1, wherein:
the antennas (31) are out-of-cabin antennas (31), the tire condition monitoring apparatus further comprising an in-cabin antenna (32) connected to the control unit (4); and
the control unit (4) can determine that the portable communication device (2) is outside the passenger compartment when transmission and reception of high frequency signals with the portable communication device (2) via at least one of the out-of-cabin antennas (31) is established, and can determine that the portable communication device (2) is in the passenger compartment when transmission and reception of high frequency signals with the portable communication device (2) via the in-cabin antenna (32) is established.

6. The tire condition monitoring apparatus according to claim 5, wherein:
the control unit (4) can transmit a first request signal, which is a high frequency signal, via each of the out-of-cabin antennas (31), and simultaneously can transmit a second request signal, which is a high frequency signal, via the in-cabin antenna (32);
in response to the reception of the first request signal, the portable communication device (2)can transmit a first response signal, which is a high frequency signal, while, in response to the reception of the second request signat, can transmit a second response signal, which is a high frequency signal; and
the control unit (4) determines whether the portable communication device (2) is located inside or outside the passenger compartment based on whether a high-frequency signal received via at least one of the out-of-cabin antennas (31) or the in-cabin antenna (32) is the first response signal or the second response signal.

7. The tire condition monitoring apparatus according to claim 1, wherein the control unit (4) can determine whether the portable communication device (2) is outside or inside the passenger compartment based on the intensity of a high frequency signal received from the portable communication device (2) via any of the antennas (31).

8. The tire condition monitoring apparatus according to claim 1, wherein:
the command signal includes a start signal and a stop signal, the control unit (4) transmitting the start signal via each of the antennas (31) when the ignition switch of the vehicle (1) is turned on, and transmitting the stop signal via each of the antennas (31) when the ignition switch is turned off; and
each sensor unit (3) is switched to a transmission mode to transmit the condition data signal in response to the reception of the start signal, and is switched to a stop mode to refrain from transmitting the condition data signal in response to the reception of the stop signal.

## Patentansprüche

1. Reifenzustandüberwachungsvorrichtung mit einer Funktion für schlüssellosen Zugang, die Folgendes umfasst:
eine tragbare Kommunikationseinrichtung (2) für schlüssellosen Zugang, die imstande ist, Signale zu übertragen und zu empfangen;
mehrere Sensoreinheiten (3), die jeweils an einem Rad (5) des Fahrzeugs (1) befestigt werden können, wobei jede Sensoreinheit (3) den Zustand eines Reifens (6), der an dem Rad (5) befestigt ist, detektiert und ein Zustandsdatensignal überträgt, das Daten enthält, die den detektierten Reifenzustand darstellen, wobei die Sensoreinheit (3) als Reaktion auf den Empfang eines Befehlssignals einen Vorgang in Übereinstimmung mit dem Befehlsinhalt des Befehlssignals ausführen kann;
mehrere Antennen (31), die jeweils in der Fahrzeugkarosserie angeordnet werden können, um einem der Räder (5) zu entsprechen; und
eine Steuereinheit (4), die in der Fahrzeugkarosserie angeordnet werden kann und mit den Antennen (31) verbunden ist, wobei die Steuereinheit (4) dann, wenn sie betrieben wird, basierend auf der Übertragung und dem Empfang von Signalen mit der tragbaren Kommunikationseinrichtung (2) über mindestens eine der Antennen (31) eine Funktion für schlüssellosen Zugang ausführt, und wobei die Steuereinheit (4) das Befehlssignal über die entsprechende Antenne (31) an jede der Sensoreinheiten (3) überträgt und das von jeder der Sensoreinheiten (3) über die entsprechende Antenne (31) empfangene Zustandsdatensignal verarbeitet, **dadurch gekennzeichnet, dass**
die tragbare Kommunikationseinrichtung (2) für schlüssellosen Zugang dafür ausgelegt ist, Hochfrequenzsignale zu übertragen und zu empfangen, dass jede Sensoreinheit (3) dafür ausgelegt ist, das Zustandsdatensignal in Form eines Hochfrequenzsignals zu übertragen, dass die Steuereinheit (4) dafür ausgelegt ist, basierend auf der Übertragung und dem Empfang von Hochfrequenzsignalen mit der tragbaren Kommunikationseinrichtung (2) über die mindestens eine der Antennen (31) die Funktion für schlüssellosen Zugang auszuführen, und dass die Steuereinheit (4) dafür ausgelegt ist, das Befehlssignal in Form eines Hochfrequenzsignals über die entsprechende Antenne an jede der Sensoreinheiten (3) zu übertragen.

2. Reifenzustandüberwachungsvorrichtung nach Anspruch 1, wobei die tragbare Kommunikationseinrichtung (2), die Sensoreinheiten (3) und die Steuereinheit (4) konfiguriert sind, Hochfrequenzsignale mit derselben Trägerfrequenz zu übertragen.

3. Reifenzustandüberwachungsvorrichtung nach Anspruch 1, wobei die Steuereinheit (4) die Befehlssignale über die Antennen (31) übertragen kann, wobei die Befehlssignale für jede Antenne (31) einen anderen Identifikationscode enthalten, wobei jede Sensoreinheit (3) das Zustandsdatensignal, das den in dem von der entsprechenden Antenne (31) empfangenen Befehlssignal enthaltenen Identifikationscode enthält, an die entsprechende Antenne (31) überträgt.

4. Reifenzustandüberwachungsvorrichtung nach Anspruch 3, wobei die Steuereinheit (4) den in dem Befehlssignal enthaltenen Identifikationscode jedes Mal verändern kann, wenn sie das Befehlssignal über jede Antenne (31) überträgt.

5. Reifenzustandüberwachungsvorrichtung nach Anspruch 1, wobei:
die Antennen (31) Antennen (31) außerhalb der Fahrgastzelle sind, wobei die Reifenzustandüberwachungsvorrichtung ferner eine Antenne (32) innerhalb der Fahrgastzelle umfasst, die mit der Steuereinheit (4) verbunden ist; und
die Steuereinheit (4) bestimmen kann, dass sich die tragbare Kommunikationseinrichtung (2) außerhalb des Fahrgastraumes befindet, wenn die Übertragung und der Empfang der Hochfrequenzsignale mit der tragbaren Kommunikationseinrichtung (2) über mindestens eine der Antennen (31) außerhalb der Fahrgastzelle hergestellt sind, und bestimmen kann, dass sich die tragbare Kommunikationseinrichtung (2) in dem Fahrgastraum befindet, wenn die Übertragung und der Empfang der Hochfrequenzsignale mit der tragbaren Kommunikationseinrichtung (2) über die Antenne (32) innerhalb der Fahrgastzelle hergestellt sind.

6. Reifenzustandüberwachungsvorrichtung nach Anspruch 5, wobei:
die Steuereinheit (4) über jede der Antennen (31) außerhalb der Fahrgastzelle ein erstes Anforderungssignal, das einem Hochfrequenzsignal entspricht, übertragen kann, und gleichzeitig über die Antenne (32) innerhalb der Fahrgastzelle ein zweites Anforderungssignal, das einem Hochfrequenzsignal entspricht, übertragen kann;
die tragbare Kommunikationseinrichtung (2) als Reaktion auf den Empfang des ersten Anforderungssignals ein erstes Antwortsignal, das einem Hochfrequenzsignal entspricht, übertragen kann, während sie in Reaktion auf den Empfang des zweiten Anforderungssignals ein zweites Antwortsignal, das einem Hochfrequenzsignal entspricht, übertragen kann; und
die Steuereinheit (4) basierend darauf, ob ein Hochfrequenzsignal, das über mindestens eine der Antennen (31) außerhalb der Fahrgastzelle oder der Antenne (32) innerhalb der Fahrgastzelle empfangen worden ist, dem ersten Antwortsignal oder dem zweiten Antwortsignal entspricht, bestimmt, ob sich die tragbare Kommunikationseinrichtung (2) innerhalb oder außerhalb des Fahrgastraums befindet.

7. Reifenzustandüberwachungsvorrichtung nach Anspruch 1, wobei die Steuereinheit (4) basierend auf der Intensität eines Hochfrequenzsignals, das über eine der Antennen (31) von der tragbaren Kommunikationseinrichtung (2) empfangen worden ist, bestimmen kann, ob sich die tragbare Kommunikationseinrichtung (2) außerhalb oder innerhalb des Fahrgastraums befindet.

8. Reifenzustandüberwachungsvorrichtung nach Anspruch 1, wobei:
das Befehlssignal ein Startsignal und ein Stoppsignal umfasst, wobei die Steuereinheit (4) das Startsignal über jede der Antennen (31) überträgt, wenn der Zündschalter des Fahrzeugs (1) geschlossen wird, und das Stoppsignal über jede der Antennen (31) überträgt, wenn der Zündschalter des Fahrzeugs (1) geöffnet wird; und
jede Sensoreinheit (3) als Reaktion auf den Empfang des Startsignals in einen Übertragungsmodus geschaltet wird, um das Zustandsdatensignal zu übertragen, und als Reaktion auf den Empfang des Stoppsignals in einen Stoppmodus geschaltet wird, um das Übertragen des Zustandsdatensignals zu unterlassen.

## Revendications

1. Appareil de surveillance d'état de pneumatiques à fonction d'entrée sans clé, comprenant :
un dispositif de communication portable à entrée sans clé (2) capable d'émettre et de recevoir des signaux ;
une pluralité d'unités de capteurs (3) pouvant être chacune reliée à une roue (5) du véhicule (1), chaque unité de capteur (3) détectant l'état d'un pneumatique (6) attaché à la roue (5) et émettant un signal de données d'état qui contient des données représentant l'état détecté du pneumatique, dans lequel, en réponse à la réception d'un signal de commande l'unité de capteur (3) peut exécuter une opération conformément au contenu de la commande dans le signal de commande ;
une pluralité d'antennes (31) chacune pouvant être agencée dans la carrosserie pour correspondre à l'une des roues (5) ; et
une unité de commande (4) pouvant être placée dans la carrosserie et connectée aux antennes (31), l'unité de commande (4) à son actionnement exécutant une fonction d'entrée sans clé en fonction de l'émission et de la réception de signaux avec le dispositif de communication portable (2) par l'intermédiaire d'au moins l'une des antennes (31), et l'unité de commande (4) émettant le signal de commande adressé à chacune des unités de capteurs (3) par l'intermédiaire de l'antenne correspondante (31) et traitant le signal de données d'état reçu depuis chacune des unités de capteurs (3) par l'intermédiaire de l'antenne correspondante (31), **caractérisé en ce que**
le dispositif de communication portable à entrée sans clé (2) est agencé pour émettre et recevoir des signaux haute fréquence, **en ce que** chaque unité de capteur (3) est agencée pour émettre le signal de données d'état sous forme de signal haute fréquence, **en ce que** l'unité de commande (4) est agencée pour exécuter la fonction d'entrée sans clé en fonction de l'émission et de la réception de signaux haute fréquence avec le dispositif de communication portable (2) par l'intermédiaire d'au moins l'une des antennes (31), et **en ce que** l'unité de commande (4) est agencée pour émettre le signal de commande sous forme de signal haute fréquence vers chacune des unités de capteurs (3) par l'intermédiaire de l'antenne correspondante.

2. Appareil de surveillance d'état de pneumatiques selon la revendication 1, dans lequel le dispositif de communication portable (2), les unités de capteurs (3) et l'unité de commande (4) sont configurés pour émettre des signaux haute fréquence ayant la même fréquence porteuse.

3. Appareil de surveillance d'état de pneumatiques selon la revendication 1, dans lequel l'unité de commande (4) peut émettre les signaux de commande par l'intermédiaire des antennes (31), les signaux de commande contenant un code d'identification différent pour chaque antenne (31), chaque unité de capteur (3) émettant vers l'antenne correspondante (31) le signal de données d'état contenant le code d'identification contenu dans le signal de commande reçu de l'antenne correspondante (31).

4. Appareil de surveillance d'état de pneumatiques selon la revendication 3, dans lequel l'unité de commande (4) peut changer le code d'identification contenu dans le signal de commande chaque fois qu'elle émet le signal de commande par l'intermédiaire de chaque antenne (31).

5. Appareil de surveillance d'état de pneumatiques selon la revendication 1, dans lequel :
les antennes (31) sont des antennes hors habitacle (31), l'appareil de surveillance d'état de pneumatiques comprenant en outre une antenne dans l'habitacle (32) connectée à l'unité de commande (4) ; et
l'unité de commande (4) peut déterminer que le dispositif de communication portable (2) est extérieur au compartiment passagers quand l'émission et la réception de signaux haute fréquence avec le dispositif de communication portable (2) sont établies par l'intermédiaire d'au moins l'une des antennes hors habitacle (31), et déterminer que le dispositif de communication portable (2) se trouve dans le compartiment passagers quand l'émission et la réception de signaux haute fréquence avec le dispositif de communication portable (2) sont établies par l'intermédiaire de l'antenne dans l'habitacle (32).

6. Appareil de surveillance d'état de pneumatiques selon la revendication 5, dans lequel :
l'unité de commande (4) peut émettre un premier signal de requête, lequel est un signal haute fréquence, par l'intermédiaire de chacune des antennes hors habitacle (31), et peut émettre simultanément un second signal de requête, lequel est un signal haute fréquence, par l'intermédiaire de l'antenne dans l'habitacle (32) ;
en réponse à la réception du premier signal de requête, le dispositif de communication portable (2) peut émettre un premier signal de réponse, lequel est un signal haute fréquence, tandis qu'à la réception du second signal de requête, il peut émettre un second signal de réponse, lequel est un signal haute fréquence ; et
l'unité de commande (4) détermine que le dispositif de communication portable (2) est situé à l'intérieur ou à l'extérieur du compartiment passagers selon qu'un signal haute fréquence reçu par l'intermédiaire d'au moins l'une des antennes hors habitacle (31) ou de l'antenne dans l'habitacle (32) est le premier signal de réponse ou le second signal de réponse.

7. Appareil de surveillance d'état de pneumatiques selon la revendication 1, dans lequel l'unité de commande (4) peut déterminer que le dispositif de communication portable (2) est extérieur ou intérieur au compartiment passagers en fonction de l'intensité d'un signal haute fréquence reçu depuis le dispositif de communication portable (2) par l'intermédiaire de n'importe laquelle des antennes (31).

8. Appareil de surveillance d'état de pneumatiques selon la revendication 1, dans lequel :
le signal de commande comporte un signal de démarrage et un signal d'arrêt, l'unité de commande (4) émettant le signal de démarrage par l'intermédiaire de chacune des antennes (31) quand le contact du véhicule (1) est mis, et émettant le signal d'arrêt par l'intermédiaire de chacune des antennes (31) quand le contact est coupé ; et
chaque unité de capteur (3) est commutée sur un mode d'émission pour émettre le signal de données d'état en réponse à la réception du signal de démarrage, et est commutée sur un mode d'arrêt pour ne pas émettre le signal de données d'état en réponse à la réception du signal d'arrêt.
